# DEMANDE DE BREVET EUROPEEN

(11) **EP 1 318 388 A1**
(43) Date de publication de la demande: **11.06.2003**
(21) Numéro de dépôt: 02293031.7
(22) Date de dépôt: 06.12.2002
(51) Int. Cl.: G01F 15/14

(54) **Procédé de fabrication d'un corps de compteur de liquide en matériau plastique, dispositif pour la mise en oeuvre du procédé et corps de compteur de liquide fabriqué par un tel procédé**

(30) Priorité: 10.12.2001 FR 0116008
(71) Demandeur: Actaris S.A.S., 92542 Montrouge (FR)
(72) Inventeur: Demia, Laurent, 71000 Macon (FR); Mercier, Alcide, 71960 Serrieres (FR)
(74) Mandataire: Feray, Valérie

(57) **Abrégé**

Un procédé de fabrication d'un corps de compteur de liquide en plastique comportant une bâche munie d'une partie inférieure (3) définissant un logement (2), une tubulure d'entrée (6) et une tubulure de sortie (7) chacune des tubulures se raccordant et débouchant dans le logement par un alésage ménagé dans une paroi latérale inférieure (10) du logement (2), consiste à :
- injecter un matériau thermoplastique dans un moule (19, 20) de forme appropriée au corps de compteur dont les tubulures sont borgnes,
- poinçonner les tubulures borgnes dans les zones de raccordement à la paroi latérale inférieure pour former lesdits alésages.

## Description

L'invention se rapporte à un procédé de fabrication d'un corps de compteur de liquide en matériau plastique, à un dispositif pour la mise en oeuvre de la méthode et également au corps de compteur de liquide fabriqué par le procédé de fabrication selon l'invention.
De façon plus précise la présente invention concerne un corps de compteur de liquide qui trouve son application de façon indifférente pour deux grands types de compteurs de fluide bien connus de l'homme du métier, à savoir les compteurs volumétriques tels que les compteurs de liquide à piston oscillant, et les compteurs de vitesse tels que les compteurs de liquide à turbine. Egalement, l'invention trouve une application à la fabrication de corps de détendeur présentant une structure similaire à celle des corps de compteur.

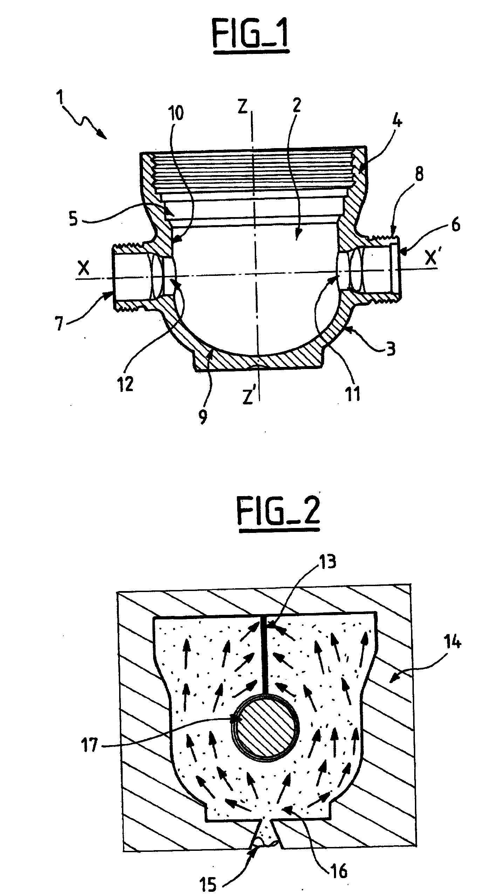

Dans le domaine des compteurs d'eau, le corps de compteur est fabriqué depuis de nombreuses années dans un alliage métallique tel que le laiton. Ce matériau offre une bonne tenue au vieillissement, en particulier au cours du temps les performances métrologiques du compteur, et son étanchéité sont maintenues.
Depuis de nombreuses années, les fabricants de compteur d'eau ont cherché à remplacer le laiton par du plastique. Le document US 4,391,139 décrit par exemple certaines parties d'un compteur d'eau fabriqué en matière plastique par une technique d'injection plastique. Le corps de compteur d'eau en plastique apporte de nombreux avantages, tels que la possibilité de modifier le design du corps de compteur avec intégration de nouvelles fonctions, changement de la couleur bien plus importante qu'avec le laiton, un gain de poids notable, un gain de coût de fabrication, une diminution du bruit généré par le compteur en fonctionnement, et enfin l'élimination des problèmes liés à la pollution de l'eau potable en contact avec le laiton.
Un tel corps de compteur est représenté à la figure 1. Le corps de compteur comporte une bâche 1 présentant un axe de symétrie ZZ'. La bâche est une pièce monobloc qui comprend une partie inférieure 3 et une partie supérieure 4. La partie inférieure 3, qui définit le logement 2 dans lequel s'insère une chambre de mesure, est limitée par un fond 9, et une paroi latérale inférieure 10 de forme cylindrique. La partie supérieure 4 est limitée par une paroi latérale supérieure, également de forme cylindrique. Les parois latérales des deux parties sont raccordées par un épaulement 5.
Le corps de compteur comprend des tubulures d'entrée 6 et de sortie 7, de forme sensiblement cylindrique, qui comportent un filetage externe 8. Chacune des tubulures débouche dans le logement 2 par un alésage ménagé dans la paroi latérale inférieure 10 du logement 2, en formant un injecteur 11 et un éjecteur 12 respectivement. L'injecteur et l'éjecteur présentent un axe commun XX' perpendiculaire à l'axe ZZ'.
La partie inférieure 3 délimite le logement de la chambre de mesure du compteur dans laquelle est montée, en fonction du type de compteur, par exemple une turbine, une hélice, ou un piston oscillant (non représentés sur les figures).
La partie supérieure 4 est destinée à recevoir un ensemble totalisateur - afficheur (non représenté) dont la fonction est de transformer la quantité de liquide ayant traversé le compteur en un nombre lisible ou communicable à un utilisateur extérieur et correspondant au volume de liquide mesuré.

Néanmoins, un problème majeur subsiste avec les corps de compteur d'eau en plastique car ils n'offrent pas une bonne performance mécanique qui conduit en particulier à des problèmes de tenue à la pression élevée de fluide et au vieillissement. A titre d'exemple, on constate sur une durée bien inférieure à la durée de vie normale attendue pour un compteur d'eau, l'apparition de fissures conduisant à des fuites. Une cause de ce problème est liée à la méthode de fabrication du corps de compteur qui induit la formation de lignes de soudure. La figure 2 représente une vue de côté en coupe d'un moule 14 destiné à la fabrication d'un corps de compteur en plastique après une phase injection dans le moule d'un matériau thermoplastique 16. De manière connue, pour la fabrication d'un tel corps de compteur, le moule 14 de forme adaptée comporte des parties pleines 17 pour former les différents trous, en particulier ceux destinés à former l'intérieur des tubulures. Lors de l'injection du matériau plastique par un point d'injection 15, la matière plastique injecté se scinde en deux fronts de matière plastique (indiqués par les flèches) au contact des parties pleines 17 du moule, lesquels se soudent après avoir contourner les parties pleines. La zone formée au niveau de la jonction des deux fronts de matière constitue une ligne de soudure 13. Il est connu que ces lignes de soudure constituent des zones de fragilité locales qui abaissent les caractéristiques de résistance mécanique du corps de compteur.

La présente invention a pour objectif de pallier aux inconvénients précités en proposant une méthode de fabrication qui permette de fabriquer par un procédé de moulage par injection plastique un corps de compteur présentant de meilleures caractéristiques mécaniques afin d'en améliorer les performances générales, par exemple pour maintenir leur résistance mécanique tout au long de la durée d'utilisation du compteur.

Cet objet est atteint grâce à un procédé de fabrication d'un corps de compteur de liquide en plastique consistant à :
- injecter un matériau thermoplastique dans un moule de forme appropriée au corps de compteur pour former un corps de compteur pour lequel les tubulures sont borgnes,
- poinçonner les tubulures borgnes dans les zones de raccordement à la paroi latérale inférieure pour former lesdits alésages.

L'invention concerne également un dispositif pour la fabrication d'un corps de compteur de liquide en plastique et le corps de compteur obtenu par ce procédé ou à partir du dispositif.

Ce procédé d'injection permet d'obtenir directement après démoulage, un corps de compteur sans lignes de soudures. Un corps de compteur fabriqué par une telle méthode présente des caractéristiques de résistance mécanique améliorés par rapport aux corps de compteur de l'art antérieur.

D'autres caractéristiques et avantages de l'invention apparaîtront dans la description suivante détaillée, non limitative, de divers modes de réalisation, en référence aux dessins annexés parmi lesquels :
- la figure 1 représente une vue de côté en coupe d'un corps de compteur en plastique selon l'art antérieur ;
- la figure 2 représente une vue de côté en coupe d'un moule destiné à la fabrication, selon un procédé de l'art antérieur, d'un corps de compteur en plastique après une phase d'injection dans le moule d'un matériau thermoplastique ;
- la figure 3.A représente une vue de côté en coupe du dispositif destiné à la fabrication selon l'invention d'un corps de compteur en plastique lors de l'étape d'injection du matériau thermoplastique ;

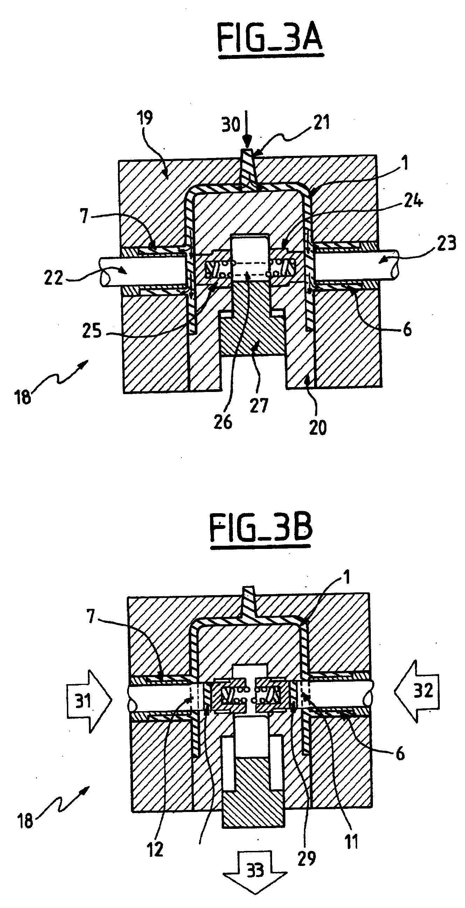

- la figure 3.B représente la vue de la figure 3.A pendant l'étape de poinçonnage.

La description qui va suivre est faite en relation avec un compteur du type volumétrique. Néanmoins, l'homme de l'art pourra aisément appliquer cette méthode de fabrication de compteurs aux autres types de compteurs tels que par exemple les compteurs de vitesse. La fabrication de corps de détendeur, très proche par sa structure d'un corps de compteur est également envisageable avec la méthode de l'invention.

Le procédé de fabrication du corps de compteur de liquide en plastique consiste lors d'une première étape (schématiquement représentée par la flèche 30 sur la figure 3.A) à injecter un matériau thermoplastique dans le moule 19, 20 de manière à former un corps de compteur pour lequel les tubulures sont borgnes.

Le dispositif pour la fabrication d'un corps de compteur de liquide en plastique 18 comprend un moule 19, 20 de forme appropriée au corps de compteur. Le moule comporte une partie extérieure ou deux demies empreintes 19, ainsi qu'une partie intérieure ou noyau 20 du moule destinées à donner la forme respectivement extérieure et intérieure au corps de compteur. L'empreinte 19 comporte deux alésages ainsi que des noyaux 22 et 23 pénétrant dans les alésages de manière à former des tubulures du corps de compteur. Le noyau 20 du moule comporte deux tiroirs 24, 25 disposés dans un logement prévu dans ledit noyau du moule. Les tiroirs sont maintenus dans une première position par l'intermédiaire d'une butée coulissante en forme de T et sous l'action d'un ressort 26 liant les deux tiroirs 24, 25 l'un à l'autre. Lorsque cette butée est retirée du noyau du moule, les tiroirs peuvent se déplacer dans une seconde position sous l'action des noyaux 22, 23.

L'empreinte 19 comporte un point d'injection 21 par lequel est injecté le matériau thermoplastique dans un espace existant entre l'empreinte et le noyau du moule et entre les tiroirs 24, 25 et les noyaux 22, 23 de manière à former le corps de compteur 1 et ses tubulures 6, 7 respectivement.
La position des tiroirs 24, 25 et des noyaux 22, 23 est telle qu'un espace existe pour permettre d'une part le passage sans obstacle du matériau thermoplastique injecté de sorte que le corps de compteur obtenu suite à cette première étape possède des tubulures borgnes. Cette première étape qui consiste à fabriquer des tubulures borgnes est particulièrement avantageuse puisque le matériau thermoplastique ne rencontrant pas d'obstacle à contourner, il n'y a pas de formation de lignes de soudure.

Le procédé de fabrication du corps de compteur de liquide en plastique consiste lors d'une seconde étape (schématiquement représentée par les flèches 31, 32 et 33 sur la figure 3.B) à poinçonner les tubulures borgnes dans les zones de raccordement à la paroi latérale inférieure 10 du corps de compteur pour venir former les alésages 11, 12. Lors de cette étape, la butée en forme de T 27 s'efface (action représentée schématiquement par la flèche 33) et les noyaux 22, 23 sont déplacés en direction du noyau du moule tout en coopérant avec les tiroirs de manière à poinçonner le fond des tubulures 6, 7 borgnes (action représentée schématiquement par les flèches 31 et 32).

Enfin, les noyaux 22, 23 et l'empreinte 19 sont retirés, le corps de compteur 1 est éjecté et les tiroirs 24, 25 reviennent en position sous l'action du ressort 26 tout en éjectant les éléments poinçonnés 28, 29 qui formaient le fond des tubulures. La butée 27, le noyau du moule 20 et l'empreinte 19 sont de nouveau assemblés de sorte qu'un nouveau cycle de fabrication puisse commencer.
De manière avantageuse, les noyaux sont utilisés pour former les tubulures et servent en outre à poinçonner la paroi latérale inférieure pour former les alésages dans le fond des tubulures et la partie inférieure du corps de compteur.

Selon une première variante de réalisation non représentée, le noyau du moule 20 est une pièce d'un seul tenant qui est éjecté une fois l'étape d'injection terminée, les noyaux 22, 23 venant poinçonnés le corps de compteur tout en pénétrant dans l'espace central laissé libre par le noyau du moule. L'étape de poinçonnage intervenant directement dans le moule selon cette première variante de réalisation.
Selon une seconde variante de réalisation non représentée, l'étape de poinçonnage intervient après que le corps de compteur possédant des tubulures borgnes ait été éjecté. Dans ce cas un outil supplémentaire destiné au perçage ou au poinçonnage des tubulures borgnes est nécessaire.

La section des noyaux peut être cylindrique ou elliptique selon le type de section de tubulure à fabriquer.

## Revendications

1. Procédé de fabrication d'un corps de compteur de liquide en plastique comportant une bâche munie d'une partie inférieure (3) définissant un logement (2), une tubulure d'entrée (6) et une tubulure de sortie (7) chacune des tubulures se raccordant et débouchant dans ledit logement par un alésage (11, 12) ménagé dans une paroi latérale inférieure (10) du logement (2), ledit procédé est **caractérisé en ce qu'**il consiste à :
- injecter (30) un matériau thermoplastique dans un moule (19, 20) de forme appropriée au corps de compteur pour former un corps de compteur (1) pour lequel les tubulures (6, 7) sont borgnes,
- poinçonner (31, 32) les tubulures borgnes dans les zones de raccordement à la paroi latérale inférieure pour former lesdits alésages (11, 12).

2. Procédé de fabrication selon la revendication précédente, pour lequel des noyaux (22, 23) sont utilisés pour former les tubulures (6, 7) et servent en outre à poinçonner la paroi latérale inférieure (10).

3. Procédé de fabrication selon la revendication 1 ou 2, pour lequel l'étape consistant à poinçonner les tubulures intervient directement dans le moule.

4. Dispositif pour la fabrication d'un corps de compteur de liquide en plastique (18) comportant une bâche munie d'une partie inférieure (3) définissant un logement (2), une tubulure d'entrée (6) et une tubulure de sortie (7) chacune des tubulures se raccordant et débouchant dans ledit logement par un alésage (11, 12) ménagé dans une paroi latérale inférieure (10) du logement (2), le dispositif comporte un moule (19, 20) de forme appropriée au corps de compteur et est **caractérisé en ce qu'**il comporte en outre des noyaux (22, 23) destinés à la réalisation de tubulures (6, 7) borgnes.

5. Dispositif pour la fabrication d'un corps de compteur de liquide en plastique selon la revendication précédente, dans lequel les noyaux (22, 23) sont aptes à poinçonner les tubulures borgnes dans les zones de raccordement à la paroi latérale inférieure de manière à former lesdits alésages (11, 12).

6. Dispositif pour la fabrication d'un corps de compteur de liquide en plastique selon la revendication 4 ou 5, dans lequel les noyaux (22, 23) coopèrent avec des tiroirs (24, 25) pour poinçonner les tubulures borgnes.

7. Dispositif pour la fabrication d'un corps de compteur de liquide en plastique selon l'une des revendications 4 à 5, dans lequel les noyaux (22, 23) sont de section cylindrique.

8. Dispositif pour la fabrication d'un corps de compteur de liquide en plastique selon l'une des revendications 4 à 5, dans lequel les noyaux (22, 23) sont de section elliptique.

9. Corps de compteur de liquide **caractérisé en ce qu'**il est fabriqué par le procédé de fabrication selon la revendication 1 ou 2.
